Europäisches Patentamt

(19) European Patent Office

Office européen des brevets

(11) Publication number: **0 254 936**
A2

# (12) EUROPEAN PATENT APPLICATION

(21) Application number: 87110004.6

(51) Int. Cl.4: **B01J 8/04** , C01C 1/04

(22) Date of filing: 10.07.87

(30) Priority: 15.07.86 US 885628

(43) Date of publication of application:
03.02.88 Bulletin 88/05

(84) Designated Contracting States:
DE FR GB IT

(71) Applicant: **The M. W. Kellogg Company**
**Three Greenway Plaza East**
**Houston Texas 77046-0395(US)**

(72) Inventor: **Noe, Stephen A.**
**2800 Jeanetta, No. 1408**
**Houston Texas 77063(US)**

(74) Representative: **Weickmann, Heinrich,**
**Dipl.-Ing. et al**
**Patentanwälte Dipl.-Ing. H.Weickmann**
**Dipl.-Phys.Dr. K.Fincke Dipl.-Ing.**
**F.A.Weickmann Dipl.-Chem. B. Huber Dr.-Ing.**
**H. Liska Dipl.-Phys.Dr. J. Prechtel Postfach**
**860820**
**D-8000 München 86(DE)**

(54) Ammonia synthesis converter.

(57) A vertical, cold wall, three bed ammonia converter having a single, shell and tube heat exchanger disposed axially within an upper, annular, catalyst bed which is arranged for axial flow of synthesis gas.

EP 0 254 936 A2

# AMMONIA SYNTHESIS CONVERTER

This invention relates to vertical converters for exothermic, catalytic synthesis of ammonia from hydrogen and nitrogen. The synthesis is well known and is typically conducted at pressures within the range from about 70 to about 325 bars and temperatures within the range from about 340°C to about 525°C.

A single converter is generally employed in modern, large capacity ammonia plants. In a 100 metric ton per day plant, the catalyst volume will range from about 40 to about 90 m³ and be contained in a converter having a diameter from about 2 to about 4 m and length or height from about 10 to about 35 m. Catalyst beds within the converter may be arranged for transverse flow, radial flow, or axial flow of gas. Axial flow converters are quite common and usually employ a cold wall, double shell design which provides a shell annulus for passage of cooling gas adjacent the outside pressure shell. The converter of the present invention is a cold wall, axial flow converter.

It is not feasible to contain the entire catalyst volume in a single catalyst bed because of reaction equilibrium considerations and the possibility of catalyst overheating and damage. It has, therefore, been common practice to arrange the catalyst in multiple beds with provision for interbed or intrabed cooling. Customarily, this cooling is provided by interbed injection of cool synthesis gas for direct heat exchange with partially converted gas (i.e. - a direct quench converter or some combination of direct gas quench with interbed heat exchangers of the shell and tube type). Converter designs which emphasize direct quench tend to be less costly than combination designs since fewer, smaller, shell and tube exchangers are employed according to the volume of quench gas introduced. Plants employing these designs do, however, suffer the penalty of higher synthesis gas compression costs since the totality of synthesis gas to the converter does not contact the totality of the catalyst therein. Therefore, more gas must be circulated to obtain a given amount of ammonia product.

From the foregoing, it may be appreciated that ammonia converters are large, complex items of equipment and that steps toward more efficient, less costly design are needed.

According to the invention a vertical, cold wall, three bed converter having a single, shell and tube heat exchanger is provided. The three axial flow catalyst beds are arranged vertically within the cylindrical inner shell of the converter. Gas flows in series through the shell annulus, the cold, shell side of the indirect heat exchanger, the upper catalyst bed, the hot exchange side of the indirect heat exchanger and, finally, in parallel through the intermediate and lower catalyst beds. Outlet gas from the intermediate and lower beds is preferably recombined for common discharge through a single gas outlet means.

The converter of the invention employs no external quench gas between or within the catalyst beds. That is to say, it is a full flow converter in which the outlet portion of the hot exchange side of the indirect heat exchanger is in exclusive flow communication with respective inlet portions of the intermediate and lower catalyst beds. Accordingly, all of the converter outlet gas from the intermediate and lower catalyst beds passes initially through the upper catalyst bed.

The catalyst beds are laterally defined by respective portions of the cylindrical inner shell and are supported by foraminous partitions which, in turn, are supported by the inner shell. An intermediate fluid barrier means is disposed between the upper and intermediate catalyst beds to prevent direct gas flow therebetween. Similarly, a lower fluid barrier means is disposed between the intermediate and lower catalyst beds to prevent direct gas flow therebetween. Downcomers are disposed in the catalyst beds to route gas in accordance with the process gas flow described above.

The upper catalyst bed is annular in shape surrounding at least the lower part of the vertical heat exchanger and is spaced therefrom by a cylindrically shaped, upper bed inner wall. The exchanger has an annular tube array and a downcomer is axially disposed within the exchanger to convey gas from the outlet of the exchanger tube side to the intermediate and lower catalyst beds.

Since reactant synthesis gas entering the upper catalyst bed is hydrogen and nitrogen with only small amounts of other gases, the synthesis reaction is relatively fast and conversion must be limited to avoid catalyst damage from excessively high temperature. Partially converted gas from the upper bed is cooled in the indirect heat exchanger and the cooled, partially converted gas is introduced in parallel to the intermediate and lower beds. This cooled gas contains ammonia and lessened amount of hydrogen and nitrogen which results in relatively slower synthesis reaction in the downstream, parallel catalyst beds as well as a higher ammonia concentration equilibrium. Accordingly, the intermediate and lower catalyst beds have decreased vulnerability to overheating as conversion to ammonia increases and, therefore, may contain more catalyst than the upper bed. For most effective utilization of the converter of the invention, the intermediate and lower catalyst beds contain substantially equal volumes of catalyst and catalyst volume of the upper bed is from about 35 to about 65 percent of catalyst volume in either the intermediate or lower catalyst bed.

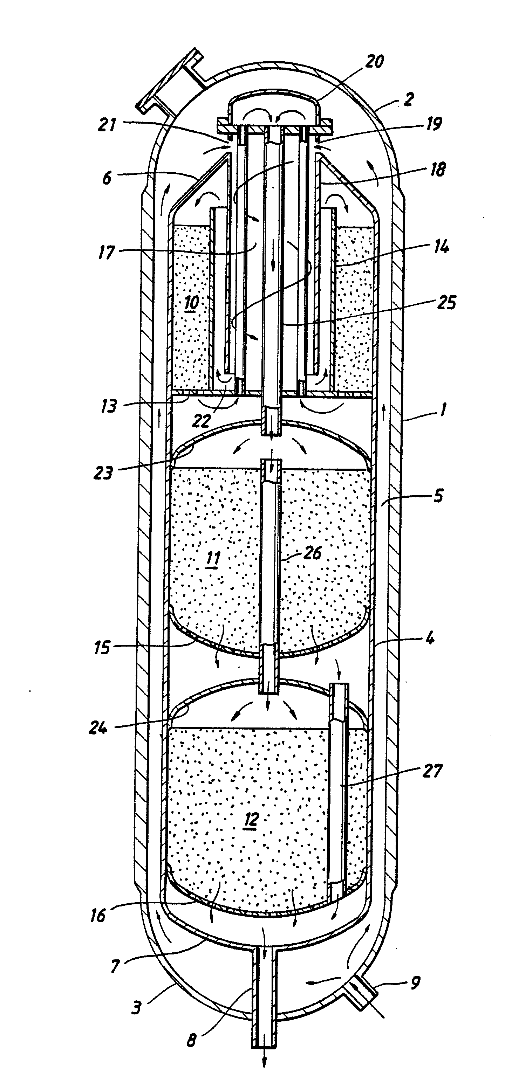

Referring to the drawing which illustrates a preferred embodiment of the invention, the vertical converter is contained within cylindrical pressure shell 1 which is attached to top outer head 2 and bottom outer head 3. A cylindrical inner shell 4 is disposed within and parallel to the pressure shell and is spaced therefrom to form shell annulus 5. Top inner head 6 and bottom inner head 7 are attached to the inner shell. Gas outlet means 8 disposed in bottom outlet head 3 and bottom inner head 7 provides fluid communication between the .inner head and external piping for conversion product gas and also provides a fluid barrier between conversion product gas and reactant synthesis gas introduced to the shell annulus through gas inlet means 9 which is also disposed in the bottom outer head.

The catalyst beds of the converter are arranged for axial downward flow, each having an open top surface and a bottom outlet portion contained by perforated supports 13, 15, and 16. Each of the beds is defined at its outer radius by cylindrical shell 4. The upper bed, which is the first process bed, is defined at its inner radius by upper bed inner wall 14 depending upwardly from upper bed annular perforated support 13.

Vertical heat exchanger 17 having shell 18 and annular tube array 19 is disposed axially within the central opening of upper annular catalyst bed 10 and spaced from inner wall 14 to form an inner annulus for gas flow from openings in the lower extremity of the exchanger shell 18 to the open top surface of the upper catalyst bed. Preferably, the bottom tube sheet of the exchanger is on the same plane as annular perforated support 13 to provide a most compact arrangement, however, the exchanger may be mounted slightly higher or lower than this plane. The upper portion of exchanger shell 18 penetrates top inner head 6 and is sealed thereto at a locus below the upper gas inlet 21 of the exchanger. Principal support for the exchanger may be from top inner head 6 but is preferably from perforated support 13. The exchanger is fitted with bonnet 20 at its upper tube sheet to return gas flowing upwardly through the annular array of exchanger tubes through first downcomer 25 which depends downwardly from the upper tube sheet and opens into the gas plenum between intermediate fluid barrier 23 and the open top surface of intermediate catalyst bed 11.

Second downcomer 26 penetrates catalyst bed 11 with its upper end opening into the same gas plenum above this bed and its lower end opening into the gas plenum between lower fluid barrier 24 and the open top surface of lower catalyst bed 12. While a single axial downcomer is shown in the drawing, two or more may be employed to convey, in any event, approximately half the gas from the first downcomer to the lower catalyst bed in such manner that the intermediate and lower catalyst beds have a split, parallel, gas flow path.

Third downcomer 27 penetrates catalyst bed 12 with its upper end opening into the gas plenum between the bottom outlet portion of intermediate bed 11 and lower fluid barrier 24. The third downcomer depends vertically upward from lower bed perforated support 16 and its lower end opens into the gas plenum formed by support 16 and bottom inner head 7. Converted gas from lower catalyst bed 12 is combined with converted gas flowing through the third downcomer from bed 11 in the same gas plenum above the bottom inner head and then flows from the converter through gas outlet means 8.

For clarity in the drawing, known accessories such as expansion joints, catalyst charge and discharge pipes, cool gas by-pass for the exchanger, and manways have not been shown.

The foregoing arrangement provides for flow of reactant synthesis gas into the converter via gas inlet 9, upwardly through shell annulus 5 to cool the pressure shell and into the shell side of the heat exchanger where the gas is heated to conversion temperature by indirect heat exchange with partially converted gas in the tube side. The heated reaction synthesis gas from the shell side is preferably mixed with from 1 to 20 volume percent of supplemental reaction synthesis gas introduced through cool gas injection means (not shown) for the purpose of precise temperature control. The reaction synthesis gas then flows axially downward through the upper catalyst bed 10, then upwardly through the tube side of the exchanger where at least a portion of exothermic reaction heat is removed from the now partially converted gas. The cooled, partially converted gas flows from the tubes of the exchanger downwardly through first downcomer 25 to the open top surface of the intermediate catalyst bed 11 where flow is divided substantially equally between intermediate catalyst bed 11 and lower catalyst bed 12 via second downcomer 26. Conversion product gas from the intermediate catalyst bed flows via third downcomer 27 to the outlet portion of lower catalyst bed 12 where it mixes with corresponding conversion product gas from the lower catalyst bed for common discharge through gas outlet 8. Accordingly, all of the gas flowing in parallel through the intermediate and lower catalyst beds is initially passed through the upper catalyst bed. That is to say, no external quenching gas is mixed with partially converted gas and interbed cooling of partially converted gas is supplied entirely by the single indirect heat exchanger.

## Claims

1. A vertical ammonia converter comprising:

a) a cylindrical pressure shell having top and bottom outer heads contiguous therewith;

b) a cylindrical inner shell disposed within substantially the entire length of the pressure shell and forming a shell annulus therewith, the inner shell having top and bottom inner heads contiguous with the inner shell;

c) gas outlet means disposed in the bottom inner head;

d) gas inlet means in fluid communication with the shell annulus;

e) an upper annular catalyst bed having an open top surface and a bottom outlet portion, the bed being defined by the inner shell, an upper bed inner wall, and a bottom annular perforated support;

f) a vertical heat exchanger having a shell and an annular tube array, the exchanger being axially spaced within the upper annular catalyst bed, the shell of the heat exchanger forming an inner annulus with the upper bed inner wall, the upper portion of the heat exchanger shell extending through and being sealed to the top inner head of the cylindrical inner shell, the shell of the heat exchanger having an upper gas inlet in fluid communication with the converter shell annulus and a lower gas outlet in fluid communication with only the inner annulus;

g) an intermediate catalyst bed having an open top surface and a bottom outlet portion defined by the cylindrical inner shell and a bottom perforated support, the intermediate catalyst bed being disposed adjacently below the upper annular catalyst bed;

h) an intermediate fluid barrier for preventing direct fluid communication between the outlet portion of the upper annular catalyst bed and the open top surface of the intermediate catalyst bed; and

i) a first downcomer spaced axially within the annular tube array of the heat exchanger providing fluid communication between the open top surface of the intermediate catalyst bed and only the upper ends of the tubes of the heat exchanger.

2. The converter of claim 1 further comprising a lower fluid barrier for preventing direct fluid communication between the outlet portion of the intermediate catalyst bed and the open top surface of the lower catalyst bed and a second downcomer disposed within the intermediate catalyst bed providing fluid communication between the open top surface of the intermediate catalyst bed and the open top surface of the lower catalyst bed.